# EUROPEAN PATENT APPLICATION

(11) **EP 1 177 956 A1**
(43) Date of publication of application: **06.02.2002**
(21) Application number: 01201983.2
(22) Date of filing: 25.05.2001
(51) Int. Cl.: B60R 25/04

(54) **Method and apparatus for vehicle security system**

(30) Priority: 02.08.2000 US 222492 P; 16.03.2001 US 810978
(71) Applicant: Siemens Automotive Corporation, Auburn Hills, Michigan 48326-2980 (US)
(72) Inventor: Banas, Patrick Alexander, Sterling Heights, Michigan 48314 (US); Poirier, James A., Sterling Heights, Michigan 48314 (US)
(74) Representative: Allen, Derek

(57) **Abstract**

A vehicle security system includes a vehicle anti-theft controller (12) in communication with an identification system (14) and a power distribution system (16). The power distributing system limits power to the ignition system starter motor (22). The power distribution system (16) supplies power at various levels in response to commands by the vehicle anti-theft controller (12). In an unarmed state, the starter motor (22) is operable when the power distribution system (16) provides a first power level thereto. In an armed state, a second power level, which is typically much lower than the first, is adequate to operate the identification system and vehicle accessory systems but not the starter motor.

## Description

### BACKGROUND OF THE INVENTION

The present invention relates generally to a security device for an automotive vehicle and more specifically to a method and apparatus which prevent operation of a vehicle ignition system by limiting power supply thereto.

Several security systems use multiple lines of defense. A first line of defense is a cut key that is used to operate the system if the cut of the key matches the lock in which it is inserted. A second line of defense is housing electronic circuitry on the key that has a unique identification code. When a properly cut key is inserted into the lock, a security device interrogates the electronic circuitry for its security code. If the security code is the proper lock operator, the engine is allowed to start. Another line of defense is a remote entry system. The remote entry system allows a user to be completely outside of the vehicle and activate/deactivate a security system.

It is known to disconnect the vehicle battery from the vehicle electrical system to assure that the vehicle cannot be started. However, these systems are of an on/off nature and require a completely separate activation/deactivation system and heavy-duty switching components. As the battery isolation system is separate from the vehicle security system, additional reliability problems may be created. Further, when the vehicle battery is disconnected from the vehicle electrical system, many electronic accessories become inoperative, necessitating separate battery back-ups, non-volatile memory and/or complex systems in which the security system is activated only after the ignition system is activated.

Accordingly, it is desirable to provide a vehicle security system that prevents engine ignition and which is operable without adversely affecting operation of the auxiliary electrical systems. It is further desirable to prevent vehicle engine start before actually performing the security check.

### SUMMARY OF THE INVENTION

The vehicle security system according to the present invention includes a vehicle anti-theft controller in communication with an identification system and a power distribution system. The power distributing system preferably includes a junction box, electronic control unit, or the like, which limits power to the ignition system starter motor and various vehicle electrical components connected thereto.

The power distribution system supplies power at various levels in response to commands by the vehicle anti-theft controller. Preferably, the starter motor is only operable when the power distribution system provides a first power level thereto. A second power level, which is typically much lower than the first, is adequate to operate the identification system and vehicle accessory systems but not the starter motor. Typically, most vehicle accessory systems will be operable at a power level, which is well below that required to operate the starter motor. Further, because the second power level is a lower power level than the first power level, the likelihood of inadvertent power source drain is also diminished.

The security system is armed after a predetermined time has elapsed after the ignition switch is shut off. However, logic functions may also be employed to immediately arm the security system such as by arming the system when the following series of events is completed: ignition switch shut off; driver door is opened; and driver door is closed.

In one embodiment, the identification system includes a key, which includes an electronic memory device such as a transponder, which stores a unique security code. If the received security code from the key is equal to the security code stored in memory of the vehicle anti-theft controller, the power distribution system supplies power at the first power level to allow the starter motor to operate. The vehicle engine will then start.

In another embodiment, a remote entry device remotely communicates with the vehicle anti-theft controller to operate as an identification system. In yet another embodiment, a counter is included within the vehicle anti-theft controller. After a predetermined number of unauthorized attempts, the vehicle anti-theft controller signals the power distribution system to supply at a third power level which is below the second power level. Further attempts to determine the security code stored in memory are thus defeated by cutting power to the remote entry system.

The present invention therefore provides a vehicle security system that prevents engine ignition without adversely affecting operation of other vehicle electrical systems.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a schematic block diagram of a vehicle security system according to the present invention; and
Figure 2 is a block diagram illustrating the logic of an arming sequence of the system of Figure 1.

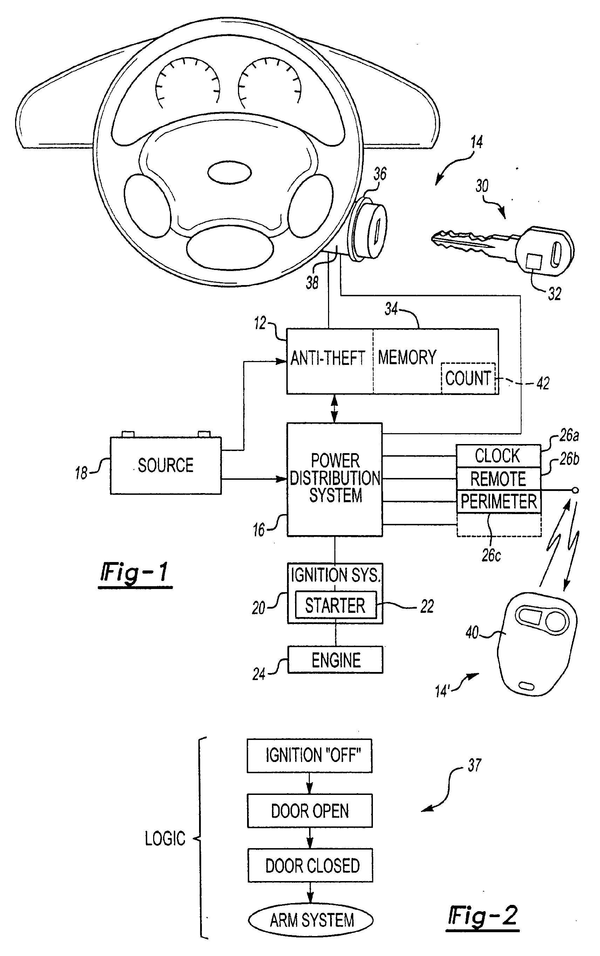

Figure 1 illustrates a security system 10 for a vehicle. The system 10 generally includes a vehicle anti-theft controller 12 in communication with an identification system 14 and a power distribution system 16. The vehicle anti-theft controller 12 is preferably microprocessor-based and has a variety of inputs and outputs for receiving and transmitting electrical signals as is known. The power distributing system 16 preferably includes a junction box, electronic control unit, or the like, which is operable to limit power to various vehicle electrical components connected thereto.

The power distribution system 16 receives power from a power source 18 such as a vehicle battery. The power source supplies power to the multiple of vehicle electronic systems, including an ignition system 20. The ignition system 20 generally includes a starter motor 22 to selectively actuate a vehicle engine 24. The starter motor 22 operates to start a vehicle engine 24 in a known manner. It should be understood that other systems which control the functioning of an engine such as an electronic fuel pump, fuel injector, intake and exhaust systems will also benefit from the present invention.

The power distribution system 16 communicates with the identification system 14 and a plurality of vehicle electronic systems 26. The vehicle electronic systems 26 include, for example only, a clock 26a, a remote entry system 26b, a perimeter security system 26c, and the like.

The power distribution system 16 supplies power at various levels in response to signals from the vehicle anti-theft controller 12. Preferably, the ignition system 20 is only operable when the power distribution system 16 provides a first power level thereto. A second power level, which is typically much lower than the first, is adequate to operate the identification system 14 and vehicle accessory systems 26. In other words, at the second power level, the identification system 14 and vehicle accessory systems 26 will operate, but the ignition system 20 will not.

As will be further described below, only when the vehicle anti-theft controller 12 receives an authorized communication from the identification system 14 will the first power level be enabled. The identification system 14 operates to authorize a user prior to allowing engine start.

In one embodiment, the identification system 14 includes a key 30 which includes an electronic memory device such as a transponder 32. The transponder 32 stores a unique security code. Memory 34 within the vehicle anti-theft controller 12 also stores the unique security code.

The vehicle anti-theft controller 12 is connected to an antenna 36 located adjacent a lock switch 38 to transmit and receive information from the transponder 26. Lock switch 38, for example, is preferably a commonly known rotatable ignition switch having at least two positions, e.g., an "off" and an "on" position. Lock switch 38 can also provide several positions commonly used in ignition switch such as a start position and an accessory position. As the second power level is adequate to allow operation of the identification system 14 and vehicle accessories 26, the authorization starts immediately. That is, the key need not be inserted and the lock switch be turned to the "on" position prior to performing the authorization.

The security system 10 is armed after a predetermined time has elapsed after the ignition switch is shut off. However, logic functions (illustrated as function blocks 37 in Figure 2) may also be employed to immediately arm the security system 10 such as by arming the system 10 when the following logic series is completed: ignition switch shut off; driver door is opened; and driver door is closed. The logic functions are preferably stored in the memory 34 of the anti-theft controller 12 and make use of various vehicle electronic devices as indicators thereof. For example only, when a vehicle door is open an illumination source is typically activated. The illumination source activation is readily detectable by the power distribution system 16. It should be realized that other logic functions to arm the security system 10 will also benefit from the present invention.

To arm or activate the security system 10, the vehicle anti-theft controller 12 communicates with the power distribution system 16 to command the power distribution system 16 to maintain the second power level. As stated above, the second power level is to low to allow operation of the starter motor 22. The starter motor 22 is inoperable and thus the vehicle engine cannot be started. The second power level, however, is adequate to allow operation of the identification system 14 and a plurality of vehicle electronic systems 26. Typically, most vehicle electrical systems will be operable at a power level which is well below that required to operate the starter motor 22. Further, because the second power level is a relatively low power level, the likelihood of inadvertent power source drain is also diminished.

When key 24 is used to operate lock switch 38, the vehicle anti-theft controller 12 sends an interrogating signal to antenna 36 and the transporter 32 responds. The vehicle anti-theft controller 12 compares the security code received from transponder 32 to the security code stored in memory 34. If the received security code is not equal to the security code stored in memory 34 of the vehicle anti-theft controller 12, the vehicle anti-theft controller 12 maintains the power distribution system 16 supply at the second power level. The starter motor 22 is inoperable and the vehicle engine 20 cannot be started.

If the received security code is equal to the security code stored in memory 34 of the vehicle anti-theft controller 12, the vehicle anti-theft controller 12 signals the power distribution system 16 to supply power at the first power level. As the first power level allows the starter motor 22 to operate, the vehicle engine will be started thereby. It should be understood that the various operations of security communications are well known and various security communication procedures will benefit from the present invention.

In another embodiment, a remote entry device 40 remotely communicates with the vehicle anti-theft controller 12 through a remote entry system 26b to operate as another identification system 14'. If the remote entry system 26b confirms an authorized user, the vehicle anti-theft controller 12, the vehicle anti-theft controller 12 signals the power distribution system 16 to supply at the first power level as described above. Operation of a remote entry system and security associated therewith is well known and need not be further disclosed herein.

In another embodiment, a counter 42 is included within the memory 34 of the vehicle anti-theft controller 12. Each time an invalid security code is relieved and does not match the security code stored in memory 34, the counter is increased. After a predetermined number of attempts, the vehicle anti-theft controller 12 signals the power distribution system 16 to supply at a third power level. The third power level is preferably below even the second power level such that further attempts to determine the security code stored in memory 34 are defeated by eliminating all power to the remote entry system 26b. In other words, the remote entry system 26b is shut down to prevent brute force attempts which send many security codes over a short period of time. Preferably, the manual presence of a valid key within the lock switch 38 will later enable the system 10 so that an authorized user can enable the system after the vehicle has been tampered with. It should be understood that the power distribution system 16 can also selectively shut down other particular accessory systems 26 powered through the power distribution system 16 based upon logic within memory 34.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A vehicle security system comprising:
a power distribution system providing a first and a second power level;
an ignition system in communication with said power distributing system, said ignition system operable when supplied with said first power level and inoperable when supplied with power at said second power level, said second power level second power level is adequate to power a plurality of vehicle accessory systems;
an identification system in communication with said power distributing system, said identification system operable at said first and said second power level; and
an anti-theft controller in communication with said identification system and said power distributing system to select between said first and said second power level.

2. The vehicle security system as recited in claim 1, wherein said anti-theft system maintains said second power level until said anti-theft controller receives an authorizing signal from said identification system.

3. The vehicle security system as recited in claim 2, wherein said identification system includes a key having a transponder, said transponder providing said authorizing signal to said anti-theft system.

4. The vehicle security system as recited in claim 1, wherein said identification system includes a remote entry system to provide said authorizing signal to said anti-theft system.

5. The vehicle security system as recited in claim 1, wherein said ignition system includes a starter motor, said starter motor completely inoperable at said second power level.

6. The vehicle security system as recited in claim 1, furthering including a vehicle accessory in communication with said power distributing system, said vehicle accessory operable at said first and said second power level.

7. The vehicle security system as recited in claim 6, wherein said vehicle accessory includes a clock.

8. The vehicle security system as recited in claim 6, wherein said vehicle accessory includes a perimeter anti-theft system.

9. The vehicle security system as recited in claim 1, furthering including a counter within said anti-theft controller, said anti-theft controller operable to select a third power level below said first power level and said second power level in response to said counter reaching a predetermined value.

10. A method of operating vehicle security system comprising the steps of:
(1) supplying a first and a second power, said first power level adequate to start a vehicle engine and said second power level inadequate to start a vehicle engine and adequate to power a plurality of vehicle accessory systems;
(2) identifying an authorized operator; and
(3) selecting between said first and said second power level in response to said step 2.

11. A method as recited in claim 10, further including the steps of:
(4) counting each identification of an unauthorized operator from said step (2); and
(5) comparing said count of said step (4) to a predetermined value.

12. A method as recited in claim 11, further including the steps of:
(6) supplying a third power level lower than said second power level, said third power level adequate to power at least one of said plurality of vehicle accessory systems; and
(7) selecting said third power level in response to said count of said step (4) equaling the predetermined value of said step (5).

13. A method of arming a vehicle security system comprising the steps of:
(1) supplying a first and a second power, said first power level adequate to operate a starter motor to start a vehicle engine and said second power level inadequate to operate the starter motor but adequate to operate a vehicle accessory system;
(2) identifying whether an operator has left the vehicle;
(3) selecting said second power level in response to said step 2; and
(4) maintaining said second power level until an authorizing signal is received.

14. A method as recited in claim 13, wherein said step 2 includes the steps of:
2a) detecting an ignition off signal;
2b) detecting a vehicle door open signal; and
2c) detecting the vehicle door close signal.

15. A method as recited in claim 13, wherein said step 2 includes the step of detecting an arm signal from a remote entry device.

16. A method as recited in claim 13, wherein said authorizing signal of step 4 includes a disarm signal from a transponder within a key.

17. A method as recited in claim 13, wherein said authorizing signal of step 4 includes a disarm signal from a remote entry device.

18. A method as recited in claim 13, wherein said step 2 includes the steps of:
2a) detecting an ignition off signal; and
2b) waiting for a predetermined time period.
